# EUROPÄISCHE PATENTANMELDUNG

(11) **EP 1 873 018 A1**
(43) Veröffentlichungstag der Anmeldung: **02.01.2008**
(21) Anmeldenummer: 07110045.7
(22) Anmeldetag: 12.06.2007
(51) Int. Cl.: B60R 13/08, F02B 77/13, G10K 11/162

(54) **Schallabsorbierendes Bauteil zur Abdeckung von Aggregaten im Motorraum von Fahrzeugen**

(30) Priorität: 28.06.2006 DE 202006010129 U
(71) Anmelder: Polytec Automotive GmbH & Co. KG, 49393 Lohne (DE)
(72) Erfinder: Esders, Helen, 49393 Lohne (DE); Soares, Jorge, 48493 Wettringen (DE)
(74) Vertreter: Jönsson, Hans-Peter

(57) **Zusammenfassung**

Die Erfindung bezieht sich auf ein schallabsorbierendes Bauteil zur Abdeckung von Aggregaten im Motorraum von Fahrzeugen, insbesondere Motorabdeckungen.

## Beschreibung

Die Erfindung bezieht sich auf ein schallabsorbierendes Bauteil zur Abdeckung von Aggregaten im Motorraum von Fahrzeugen, insbesondere Motorabdeckungen.

Es ist bereits bekannt, zur Dämpfung von Vibrationen und Absorbierung des Schalls von Motoren, Abdeckungen einzusetzen, die zusätzlich noch eine Designfunktion haben. Speziell bei Dieselmotoren entstehen durch die Einspritzsysteme, insbesondere durch die Injektoren beim Common Rail-System, zusätzliche Geräusche (sogenanntes "Nageln"), die sich nachteilig auf die Akustik im Fahrzeuginneren auswirken.

Aus der DE 197 39 778 C2 ist ein vibrationsdämpfendes und schallabsorbierendes Bauteil bekannt, das aus einem steifen Trägerteil besteht, an dem ein Schaumkörper an der dem vibrierenden Bereich zugewandten Oberfläche auflaminiert ist.

Eine schalldämmende Schicht auf Basis von Zellulosefasern und einem thermoplastischen Kunstharz mit einem Schmelzpunkt von < 200 °C ist aus der DE 601 06 160 T2 bekannt. Die erste Schicht kann mit einer weiteren Schicht aus Kunstharzschaum ausgerüstet sein. Die erste Schicht wird durch thermisches Pressen hergestellt und ein Verbund mehrerer Schichten durch Laminieren.

Ein schallisolierendes Verbundteil, bestehend aus einer Schwerschicht und einer mit dieser verbunden Schalldämpfungsschicht aus porösem und/oder textilem Material, ist in der DE 103 34 274 B3 beschrieben. Die Schwerschicht besteht aus einer plastifizierten Kunststoffmasse und wird im Fliesspressen als Formteil hergestellt. Die Schalldämpfungsschicht weist eine durch thermisches Umformen gebildete Profilstruktur auf. Der Verbund der beiden Schichten erfolgt stellenweise durch Schweißen.

Aus der DE 199 04 986 A1 ist ein Motorabdeckung bekannt, die aus mindestens zwei Decklagen aus Schaumstoffmaterial und mindestens einer Füllschicht aus Schaumstoffmaterial besteht, wobei die Decklagen und die Füllschicht gemäss dem angegeben Beispiel aus einem PUR-Weichschaum bestehen. Die einzelnen Lagen bzw. Schichten werden separat vorgefertigt, zugeschnitten und in einem Formpresswerkzeug zu einer Abdeckung verpresst. Die bekannten schallisolierenden Abdeckungen sind in ihrer Herstellung kostenaufwändig. Bei Abdeckungen in einer Schichtbauweise ist die Ausbildung einer dreidimensionalen Struktur nur schwer möglich.

An Abdeckungen für Geräusche erzeugende Aggregate, insbesondere von Dieselmotoren, im Motorraum von Fahrzeugen werden besondere Anforderungen gestellt. Diese sollen ein geringes Gewicht besitzen und Geräusche im Frequenzbereich ab 1000 Hz möglichst nahezu vollständig absorbieren. Das sogenannte "Nageln" der Einspritzsysteme soll in ausreichendem Masse gedämpft werden.

Die Abdeckung soll einfach und kostengünstig herstellbar sein und eine dreidimensionale Struktur aufweisen, die an die äußere Kontur der Geräusche erzeugenden Bauteile anpassbar ist und den auftretenden Schall in seiner Ausbreitung begrenzt. Außerdem sollen auftretende Schwingungen und Reaktionskräfte auf Lagerstellen und Bauteile möglichst vollständig kompensiert werden.

Der Erfindung liegt die Aufgabe zugrunde, schallabsorbierende Bauteile zur Abdeckung von Aggregaten im Motorraum von Fahrzeugen zu schaffen, die sich durch verbesserte anwendungstechnische Eigenschaften auszeichnen und kostengünstig herstellbar sind.

Erfindungsgemäß wird die Aufgabe gelöst durch ein schallabsorbierendes Bauteil zur Abdeckung von Aggregaten im Motorraum von Fahrzeugen, bestehend aus einem Schaumkörper, das dadurch gekennzeichnet ist, dass dieser aus mindestens zwei Teilen (2, 3) unterschiedlicher Dichte gebildet ist, wobei das erste Teil (2) aus einem Hartschaum hoher Dichte besteht, das in seiner Geometrie so ausgebildet ist, dass es die Geräusche erzeugenden Teile oder Baugruppen des Motors überdeckt, und das zweite Teil (3) aus einem weich eingestellten Schaum niedriger Dichte besteht, das zumindest teilweise an das erste Teil (2) angeschäumt ist und sich zumindest über den Bereich der Auflagestellen (4a, 4b) erstreckt, die in Berührungskontakt mit Teilen oder Baugruppen des Motors stehen.

Vorteilhafte Ausgestaltungen und Weiterbildungen sind Gegenstand der davon abhängigen Ansprüche.

Das vorgeschlagene schallabsorbierende Bauteil besteht aus einem Schaumkörper, der aus mindestens zwei Teilen unterschiedlicher Dichte gebildet ist. Das erste Teil besteht aus einem Hartschaum hoher Dichte, das in seiner Geometrie so ausgebildet ist, dass es die besonders starke Geräusche erzeugenden Teile oder Baugruppen des Motors, wie beispielsweise die Injektoren, überdeckt. Vorzugsweise sollte das Teil aus Hartschaum nicht mit diesen in Berührungskontakt stehen, um eine gute Schallentkopplung zu erreichen.

Das zweite Teil besteht aus einem weich eingestellten Schaum niedriger Dichte, das zumindest teilweise an das erste Teil aus Hartschaum angeschäumt ist und sich zumindest über den Bereich der Lagerstellen bzw. Auflageflächen des Bauteils bzw. der Abdeckung erstreckt. Die Lagerstellen bilden die Teile des Schaumkörpers, mit denen der Schaumkörper an den Aggregaten im Motorraum abgestützt wird bzw. aufliegt. Der Weichschaum liegt an bestimmten Stellen der Aggregate auf und das Teil aus Hartschaum überdeckt beispielsweise die Geräusche erzeugenden Bauteile berührungslos. Dadurch wird eine wirksame Kapselung der geräuschintensiven Bauteile erzielt.

Verfahrenstechnisch wird erst das erste Teil aus Hartschaum durch Formschäumen hergestellt und anschließend an dieses das zweite Teil aus Weichschaum durch einen weiteren Formschäumvorgang angeschäumt, wobei das erste Teil aus Hartschaum auch teilweise umschäumt werden kann. Die Verbindung der den Schaumkörper bildenden Teile erfolgt ohne zusätzliche Verbindungsmittel. Der angeschäumte Weichschaum verbindet sich mit den entsprechenden Flächen des ausgehärteten Hartschaumes. Die beiden zeitlich nacheinander stattfindenden Formschäumvorgänge können in zwei getrennten Werkzeugen oder in einem Werkzeug erfolgen. Bei Einsatz von zwei getrennten Werkzeugen wird das im ersten Werkzeug hergestellte Teil aus Hartschaum nach dem Aushärten in das zweite Werkzeug eingelegt und in diesem der weiche Schaum niedriger Dichte angeschäumt. Bei einem einteiligen Werkzeug erfolgt die Herstellung in zwei Stufen, erst Formschäumen des Teils aus Hartschaum und nachfolgendes Anschäumen des zweiten Teils aus Weichschaum, wobei das Werkzeug in an sich bekannter Art mit Schiebern ausgerüstet ist, um den zweistufigen Schäumvorgang zu ermöglichen.

Mittels bekannter CAD-Technik wird der herzustellende Schaumkörper vorab in seiner Geometrie so konstruiert, dass die beiden Teile aus Hartschaum und Weichschaum eine optimale Geräusch- und Schallisolierung im Motorraum bewirken, wobei ausgehend von der Geometrie der beiden Teile die Auslegung des Werkzeuges bzw. der Werkzeuge vorgenommen wird.

Die Kombination einer Schaumpaarung von zwei Schäumen unterschiedlicher Dichte für einen Schaumkörper als schallabsorbierendes Bauteil bietet mehrere Vorteile. Die Geometrien der beiden unterschiedlichen Schäume können den speziellen Gegebenheiten im Motorraum von Fahrzeugen angepasst werden. Für Aggregate, die einen besonders hohen Geräuschpegel erzeugen, ist eine Isolierung mittels eines Hartschaums vorgesehen. Für alle anderen Bereiche im Motorraum mit geringerer Geräuschentwicklung erfolgt eine Isolierung mittels eines Weichschaums. Dadurch lassen sich auch gezielt Gewichtseinsparungen erreichen, da der Anteil an Hartschaum nur auf die unmittelbaren stark geräuschaktiven Zonen beschränkt werden kann (Weichschaum besitzt eine geringere Dichte und ist bei gleichem Volumen leichter als Hartschaum). Vom Hartschaum übertragene Schwingungen und/oder Schall werden vom angrenzenden oder anliegenden Weichschaum absorbiert. Die Stellen des Schaumkörpers, die als Auflagestellen dienen, bestehen aus Weichschaum. Dadurch werden auftretende Rückstellkräfte des Schaumkörpers minimiert. Aufgrund der Bereiche unterschiedlicher Dichte des Schaumkörpers kann auf im Motorraum auftretende verschiedene Schallquellen mit unterschiedlichen Frequenzen gezielt reagiert und dadurch eine sehr gute Geräuschdämpfung erzielt werden.

Vorzugsweise kann das erste Teil auch aus mehreren beabstandet zueinander angeordneten Teilstücken aus Hartschaum hoher Dichte bestehen, an die das zweite Teil aus weich eingestelltem Schaum angeschäumt ist, derart, dass die einzelnen Teilstücke aus Hartschaum und das zweite Teil aus Weichschaum zu einem Schaumkörper mit unterschiedlichen schallabsorbierenden Zonen verbunden sind.

Das erste Teil oder dessen Teilstücke aus Hartschaum können an mehreren Flächen mit dem Weichschaum umschäumt sein. Dabei sollte die der Geräuschquelle zugewandte Fläche des ersten Teils bzw. der Teilstücke frei von Weichschaum sein.

Das zweite Teil aus Weichschaum niederer Dichte besitzt z.B. seitliche Verlängerungsabschnitte, die vorzugsweise die Aggregate im Motorraum überdecken, die keine oder nur geringe Geräusche erzeugen.

Der Schaumkörper kann mit seiner von der Geräuschquelle abgewandten Seite an einem stabilen Abdeckbauteil befestigt sein.

Das zweite Teil aus Weichschaum ist an der von der Geräuschquelle abgewandten Seite des ersten Teils oder der Teilstücke aus Hartschaum angeordnet und liegt an einem zusätzlichen stabilen Abdeckbauteil an. Diese Ausführung ermöglicht eine sehr gute Schallentkopplung des Teils aus Hartschaum.

Das erste Teil aus Hartschaum hoher Dichte und das zweite Teil aus Weichschaum niedriger Dichte können aus unterschiedlichen Schaumstoffmaterialien bestehen, wobei jedoch nur solche Materialien auf Basis von Kunststoffen in Frage kommen, die sich im Formschäumverfahren verarbeiten lassen.

Besonders geeignet sind Ausgangsmaterialien zur Herstellung von PUR- oder PIR-Formschäumen nach dem RIM-Verfahren als Hart- bzw. Weichschaum.

Der Weichschaum besteht z.B. aus einer Mischung spezieller Polyetherpolyole, Katalysatoren, Stabilisatoren, Farbzusätzen und Wasser (Komponente A) und einer Isocyanatkomponente, beispielsweise ISO 143/1 Diphenylmethandiisocyanat enthaltenden Mischung (Komponente B).

Ein geeigneter Hartschaum als Integralschaum besteht aus einem Gemisch aus Polyetherpolyolen, Katalysatoren, Stabilisatoren und Farbzusätzen (Komponente A) und als Komponente B einer Isocyanatkomponente, beispielsweise einer Zubereitung aus Diphenylmethandiisocyanat (= ISO 134/13).

Das aus Hartschaum bestehende erste Teil sollte eine Dichte aufweisen, die um das 2 bis 5 fache höher ist als die Dichte des zweiten Teils aus Weichschaum.

Der weich eingestellte Schaum sollte eine Dichte von 0,06 bis 0,25 g/cm³ besitzen und der Hartschaum eine Dichte von größer als 0,3 g/cm³. Das Verhältnis der Dichten zwischen Hartschaum und Weichschaum beträgt vorzugsweise 3:1.

Die Erfindung soll nachstehend an einem Ausführungsbeispiel erläutert werden. In der zugehörigen Zeichnung zeigen:
Fig. 1 eine erste Ausführungsvariante eines Schaumkörpers für eine Motorabdeckung als Längsschnittdarstellung und
Fig. 2 eine zweite Ausführungsvariante eines Schaumkörpers für eine Motorabdeckung als Längsschnittdarstellung.

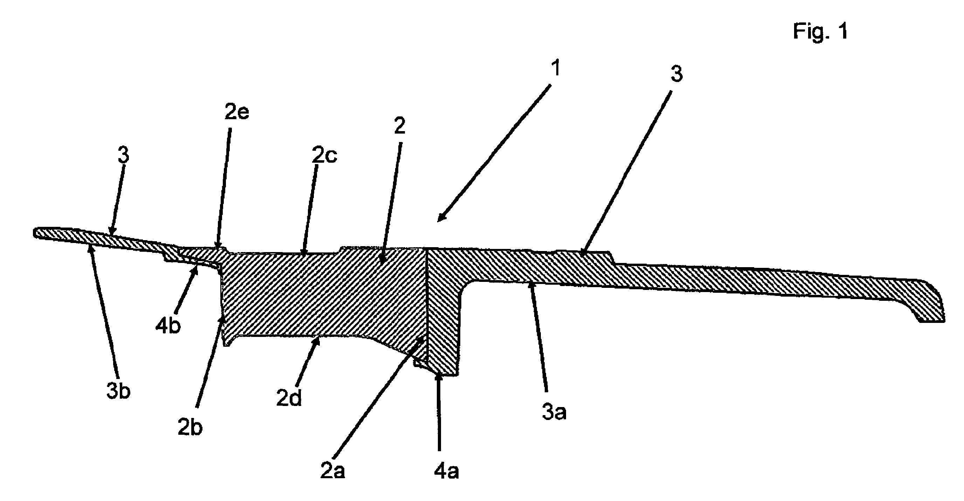

Die in Fig. 1 gezeigte erste Ausführungsvariante eines Schaumkörpers 1 für eine Motorabdeckung besteht aus einem Teil 2 aus einem PUR-Hartschaum hoher Dichte und einem Teil 3 aus einem PUR-Weichschaum. Bei den Ausgangskomponenten Polyisiocanate, Polyole, Treibmittel und Zusatzstoffe zur Herstellung der jeweiligen PUR-Schäume handelt es sich um bekannte Rezepturen handelsüblicher Hersteller.

Das aus PUR-Hartschaum bestehende Teil 2 wurde ausgehend von der Anordnung der Motoraggregate in seiner Geometrie auf einem Rechner mittels CAD-Software konstruiert. Es wurde so ausgelegt, dass es den Freiraum über den Injektoren eines Dieselmotors mit Common Rail-Einspritzung ausfüllt und die Zylinderkopfhaube mit überdeckt. Das PUR-Hartschaum-Teil 2 wird in einem ersten Werkzeug durch Formschäumen nach dem bekannten RIM-Verfahren hergestellt.

Als Ausgangsmaterial wurde eine PUR-Hartschaum-Rezeptur eingesetzt, die einen geschäumten Formkörper mit einer Dichte von 0,4 g/cm³ ergibt. Das hergestellte PUR-Hartschaum-Teil 2 wird in ein zweites Werkzeug eingelegt und durch einen zweiten Formschäumvorgang wird das PUR-Weichschaum-Teil 3 angeschäumt, an der Seitenwand 2a und an der Unterseite des Kragens 2e des Hartschaum-Teils 2. An die Oberseite 2c, die Unterseite 2d, die in Richtung der Injektoren gerichtet ist, und an die zur Seitenwand 2a gegenüberliegende Seitenwand 2b ist kein PUR-Weichschaum angeschäumt. Die an der Seitenwand 2a und an der Unterseite des Kragens 2e angeschäumte PUR-Weichschaumschicht 3 besitzt seitliche Verlängerungsabschnitte 3a und 3b, die die weiteren Aggregate im Motorraum überdecken.

Der kurze Verlängerungsabschnitt 3b besitzt eine Dicke von ca. 15 mm und der andere Verlängerungsabschnitt 3a eine Dicke von ca. 30 mm.

Der an der Seitenwand 2a angeschäumte Abschnitt aus PUR-Weichschaum überragt das Teil 2 um einige mm zur Bildung einer weichen Auflagefläche 4a der Motorabdeckung. Die andere Auflagefläche 4b der Motorabdeckung bildet die Unterseite des Kragens 2e mit der angeschäumten PUR-Weichschaum-Schicht 3.

Die Ausbildung der unmittelbaren Auflageflächen 4a, 4b der Motorabdeckung mit einer Schicht aus PUR-Weichschaum sorgt dafür, dass auftretende Rückstellkräfte des Schaumkörpers 1 auf die Motorbauteile weitestgehend reduziert werden.

Die Rezeptur für den PUR-Weichschaum wurde so zusammengestellt, dass dieser eine Dichte von 0,09 g/cm³ besitzt.

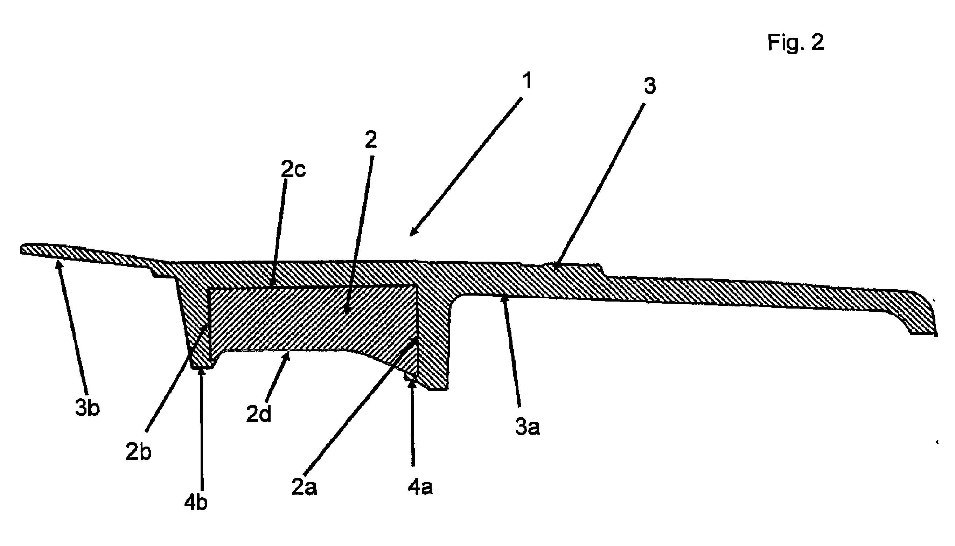

Die in Fig. 2 gezeigte Ausführungsvariante des Schaumkörpers 1 unterscheidet sich von der Ausführung gemäss Fig. 1, dadurch, dass das PUR-Hartschaumteil 2 an drei Seiten, den Seitenwänden 2a und 2b sowie der Oberseite 2c, mit PUR-Weichschaum 3 umschäumt ist. Lediglich die in Richtung der Injektoren zeigende Unterseite 2d ist nicht mit einer PUR-Weichschaumschicht versehen, da diese die Aggregate nicht berührt, sondern in einem Abstand von ca. 10 mm angeordnet ist. Der Schaumkörper 1 wird mit seiner Oberseite an einer stabilen Abdeckung befestigt, die in Fig. 2 nicht dargestellt ist. Zwischen dem PUR-Hartschaumteil 2 und der stabilen Abdeckung befindet sich PUR-Weichschaum 3, durch den eine wirksame Schallentkopplung erreicht wird.

Der umschäumte PUR-Weichschaum 3 überragt im Bereich der beiden Seitenwände 2a, 2b das Hartschaumteil 2 zur Bildung weicher Auflageflächen 4a und 4b. Das PUR-Weichschaumteil 3 besitzt analog wie in Fig. 1 seitliche Verlängerungsabschnitte 3a und 3b. Diese liegen im montierten Zustand der Motorabdeckung bei beiden Ausführungen gemäss Fig. 1 und Fig. 2 auf ebenen Flächen der Zylinderkopfhaube auf.

Das Hartschaumteil 2 und das Weichschaumteil 1 bestehen aus den gleichen Materialien wie bei der in Fig. 1 beschriebenen Ausführung.

## Patentansprüche

1. Schallabsorbierendes Bauteil zur Abdeckung von Aggregaten im Motorraum von Fahrzeugen, bestehend aus einem Schaumkörper, **dadurch gekennzeichnet, dass** dieser aus mindestens zwei Teilen (2, 3) unterschiedlicher Dichte gebildet ist, wobei das erste Teil (2) aus einem Hartschaum hoher Dichte besteht, das in seiner Geometrie so ausgebildet ist, dass es die Geräusche erzeugenden Teile oder Baugruppen des Motors überdeckt, und das zweite Teil (3) aus einem weich eingestellten Schaum niedriger Dichte besteht, das zumindest teilweise an das erste Teil (2) angeschäumt ist und sich zumindest über den Bereich der Auflagestellen (4a, 4b) erstreckt, die in Berührungskontakt mit Teilen oder Baugruppen des Motors stehen.

2. Schallabsorbierendes Bauteil nach Anspruch 1, **dadurch gekennzeichnet, dass** das zweite Teil (3) aus Weichschaum seitliche Verlängerungsabschnitte (3a, 3b) besitzt, die weitere Teile oder Baugruppen des Motors überdecken.

3. Schallabsorbierendes Bauteil nach einem der Ansprüche 1 oder 2, **dadurch gekennzeichnet, dass** das erste Teil (2) aus mehreren beabstandet zueinander angeordneten Teilstücken aus Hartschaum hoher Dichte besteht, und das zweite Teil (3) aus weich eingestelltem Schaum an den Teilstücken angeschäumt ist, derart, dass die einzelnen Teilstücke und das zweite Teil (3) zu einem Schaumkörper (1) mit unterschiedlichen schallabsorbierenden Zonen verbunden sind.

4. Schallabsorbierendes Bauteil nach einem der Ansprüche 1 bis 3, **dadurch gekennzeichnet, dass** das erste Teil (2) die Geräusche erzeugenden Teile oder Baugruppen des Motors berührungslos überdeckt.

5. Schallabsorbierendes Bauteil nach einem der Ansprüche 1 bis 4, **dadurch gekennzeichnet, dass** das erste Teil (2) oder dessen Teilstücke an mehreren Flächen (2a, 2b, 2c) mit dem Weichschaum (3) umschäumt sind.

6. Schallabsorbierendes Bauteil nach einem der Ansprüche 1 bis 5, **dadurch gekennzeichnet, dass** das zweite Teil (3) aus Weichschaum die Aggregate im Motorraum überdeckt, die keine oder nur geringe Geräusche erzeugen.

7. Schallabsorbierendes Bauteil nach einem der Ansprüche 1 bis 6, **dadurch gekennzeichnet, dass** der Schaumkörper (1) mit seiner von der Geräuschquelle abgewandten Seite an einem Abdeckbauteil befestigt ist.

8. Schallabsorbierendes Bauteil nach einem der Ansprüche 1 bis 7, **dadurch gekennzeichnet, dass** das zweite Teil (3) aus Weichschaum an der Oberseite (2c) des ersten Teils (1) angeschäumt ist und auf dem zweiten Teil (3) das Abdeckbauteil aufliegt und befestigt ist.

9. Schallabsorbierendes Bauteil nach einem der Ansprüche 1 bis 8, **dadurch gekennzeichnet, dass** das erste Teil (2) und das zweite Teil (3) aus PUR- oder PIR-Formschäumen gebildet sind.

10. Schallabsorbierendes Bauteil nach einem der Ansprüche 1 bis 9, **dadurch gekennzeichnet, dass** das erste Teil (2) eine Dichte aufweist, die um das 2 bis 5 fache höher ist als die Dichte des zweiten Teils (3).

11. Schallabsorbierendes Bauteil nach einem der Ansprüche 1 bis 10, **dadurch gekennzeichnet, dass** das aus dem weich eingestellten Schaum bestehende zweite Teil (3) eine Dichte von 0,06 bis 0,25 g/cm³ besitzt.

12. Schallabsorbierendes Bauteil nach einem der Ansprüche 1 bis 11, **dadurch gekennzeichnet, dass** das aus dem Hartschaum bestehende erste Teil (2) eine Dichte von größer 0,3 g/cm³ besitzt.
